(19) Europäisches Patentamt
European Patent Office
Office européen des brevets

(11) **EP 4 468 255 A1**

(12) **EUROPEAN PATENT APPLICATION**
published in accordance with Art. 153(4) EPC

(43) Date of publication:
**27.11.2024 Bulletin 2024/48**

(21) Application number: **23802496.2**

(22) Date of filing: **20.03.2023**

(51) International Patent Classification (IPC):
***G06V 10/774*** (2022.01)   ***G06V 10/80*** (2022.01)
***G06N 3/08*** (2023.01)

(86) International application number:
**PCT/CN2023/082436**

(87) International publication number:
**WO 2023/216720 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.05.2022  CN 202210508810**

(71) Applicant: **Tencent Technology (Shenzhen)
Company Limited
Shenzhen, Guangdong 518057 (CN)**

(72) Inventors:
• **HUANG, Yawen**
  **Shenzhen, Guangdong 518057 (CN)**
• **ZHENG, Yefeng**
  **Shenzhen, Guangdong 518057 (CN)**
• **ZHANG, Le**
  **Shenzhen, Guangdong 518057 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **IMAGE RECONSTRUCTION MODEL TRAINING METHOD AND APPARATUS, DEVICE, MEDIUM, AND PROGRAM PRODUCT**

(57)    This application discloses a training method and apparatus of an image reconstruction model, a device, a medium, and a program product. The method includes: obtaining a first sample image and at least two second sample images (302); respectively adding at least two damage features to the first sample image to generate at least two single-degradation-type images (304); fusing the single-degradation-type images to obtain a multi-degradation-type image (306); performing image reconstruction processing on the multi-degradation-type image to generate a predicted reconstruction image (308); calculating a loss function value based on the second sample images, the single-degradation-type images, the first sample image, and the predicted reconstruction image (310); and updating a model parameter of the model based on the loss function value (312). The model obtained through training by using the method avoids an accumulated error caused by reconstructing damaged parts of an image in sequence.

```
Obtain a first sample image and at least two second sample images          302

Respectively add at least two damage features, each representing a damaged    304
part of one of the second sample images, to the first sample image, to
generate at least two single-degradation-type images

Fuse the at least two single-degradation-type images, to obtain a multi-      306
degradation-type image corresponding to the first sample image

Perform image reconstruction processing on the multi-degradation-type        308
image, to generate a predicted reconstruction image corresponding to the
multi-degradation-type image

Calculate a loss function value based on each of the second sample images,    310
each of the single-degradation-type images, the first sample image, and the
predicted reconstruction image

Update a model parameter of an image reconstruction model based on the        312
loss function value
```

FIG. 3

**Description**

RELATED APPLICATION

This application claims priority to Chinese Patent Application No. 202210508810.2, filed on May 10, 2022 and entitled "TRAINING METHOD AND APPARATUS OF IMAGE RECONSTRUCTION MODEL, MEDIUM, AND PROGRAM PRODUCT".

TECHNICAL FIELD

Embodiments of this application relate to the field of image processing technologies, and specifically, to a training method and apparatus of an image reconstruction model, a device, a medium, and a program product.

BACKGROUND

A high-quality three-dimensional image can more clearly display detailed information. For example, in the medical field, a high-quality three-dimensional medical image is helpful for medical diagnosis and analysis. However, in a process of forming, recording, processing, and transmitting an image, image quality deteriorates due to imperfection of an imaging system, a recording device, a transmission medium, and a processing method.

In a related technology, a mapping relationship between a low-quality image and a high-quality image that are in pair is directly learned by using a deep convolutional neural network, to generate a high-quality three-dimensional image based on a low-quality three-dimensional image.

However, when the low-quality three-dimensional image has a plurality of damaged parts, for example, a noise loss and an image loss, in the foregoing method, the damaged parts of the low-quality three-dimensional image are usually reconstructed in sequence. A result is that a reconstruction error in a first phase is propagated to a subsequent phase. As a result, an overall image reconstruction error is large.

SUMMARY

This application provides a training method and apparatus of an image reconstruction model, a device, a medium, and a program product, to obtain an accurate image reconstruction result. The technical solutions are as follows:

According to one aspect of this application, a training method of an image reconstruction model is provided. The method includes:

obtaining a first sample image and at least two second sample images, where each of the second sample images has a damaged part with a single type of damage, and image quality of the first sample image is greater than image quality of each of the second sample images;

respectively adding at least two damage features, each representing the damaged part of one of the second sample images, to the first sample image, to generate at least two single-degradation-type images; and fusing the at least two single-degradation-type images, to obtain a multi-degradation-type image, where the multi-degradation-type image is an image having at least two types of damage;

performing image reconstruction processing on the multi-degradation-type image, to generate a predicted reconstruction image;

calculating a loss function value based on each of the second sample images, each of the single-degradation-type images, the first sample image, and the predicted reconstruction image; and

updating a model parameter of the image reconstruction model based on the loss function value.

In a possible implementation, the damage type includes at least one of a blur damage type, a noise damage type, and a bias damage type.

In a possible implementation, the method further includes:

obtaining a first image, where the first image is an image having a plurality of damage types;

performing image reconstruction processing on the first image based on a trained reconstruction network layer, to obtain a first reconstruction image, where the first reconstruction image is an image obtained by removing the plurality of types of damage from the first image; and

outputting the first reconstruction image.

According to one aspect of this application, a training apparatus of an image reconstruction model is provided.

The apparatus includes:

an obtaining module, configured to obtain a first sample image and at least two second sample images, where each of the second sample images has a damaged part with a single type of damage, and image quality of the first sample image is greater than image quality of each of the second sample images;

a degradation module, configured to respectively add at least two damage features, each representing the damaged part of one of the second sample images, to the first sample image, to generate at least two single-degradation-type images;

a fusion module, configured to fuse the at least two single-degradation-type images, to obtain a multi-degradation-type image, where the multi-degradation-type image is an image having at least two types of damage;

a reconstruction module, configured to perform image reconstruction processing on the multi-degradation-type image, to generate a predicted reconstruction image;

a calculation module, configured to calculate a loss function value based on each of the second sample images, each of the single-degradation-type images, the first sample image, and the predicted reconstruction image; and

an updating module, configured to update a model parameter of the image reconstruction model based on the loss function value.

According to another aspect of this application, a computer device is provided. The computer device includes a processor and a memory. The memory stores at least one computer program, and the at least one computer program is loadable and executable by the processor to implement the training method of the image reconstruction model according to the foregoing aspect.

According to another aspect of this application, a computer storage medium is provided. The computer-readable storage medium stores at least one computer program, and the at least one computer program is loadable and executable by a processor to implement the training method of the image reconstruction model according to the foregoing aspect.

According to another aspect of this application, a computer program product is provided. The computer program product includes a computer program, and the computer program is stored in a computer-readable storage medium. The computer program is readable by a processor of a computer device from the computer-readable storage medium and executable by the processor, to enable the computer device to perform the training method of the image reconstruction model according to the foregoing aspects.

A beneficial effect brought by the technical solutions provided in this application at least includes:

the first sample image and at least two second sample images are obtained; the at least two damage features, each representing the damaged part of one of the second sample images, are respectively added to the first sample image, to generate the at least two single-degradation-type images; the at least two single-degradation-type images are fused, to obtain the multi-degradation-type image; then image reconstruction processing is performed on the multi-degradation-type image, to generate the predicted reconstruction image; and a computer device calculates the loss function value based on each of the second sample images, each of the single-degradation-type images, the first sample image, and the predicted reconstruction image; and updates the model parameter of the image reconstruction model based on the loss function value. According to the training method of the image reconstruction model provided in this application, image damage of a plurality of types of damage is simultaneously performed on the first sample image, to obtain the multi-degradation-type image, and the multi-degradation-type image having the plurality of types of damage is reconstructed. When the model obtained through training by using the foregoing method is used, a plurality of types of damage of a low-quality image may be simultaneously reconstructed. This avoids an accumulated error caused by reconstructing the damaged parts of the low-quality image in sequence, and further improves image reconstruction precision of a trained image reconstruction model.

BRIEF DESCRIPTION OF THE DRAWINGS

FIG. 1 is a schematic diagram of a training method of an image reconstruction model according to an exemplary embodiment of this application.

FIG. 2 is a schematic diagram of an architecture of a computer system according to an exemplary embodiment of this application.

FIG. 3 is a flowchart of a training method of an image reconstruction model according to an exemplary embodiment of this application.

FIG. 4 is a flowchart of a training method of an image reconstruction model according to an exemplary embodiment of this application.

FIG. 5 is a schematic diagram of a training method of an image reconstruction model according to an exemplary embodiment of this application.

FIG. 6 is a schematic diagram of a reconstruction effect of an image reconstruction model according to an exemplary embodiment of this application.

FIG. 7 is a schematic diagram of a reconstruction effect of an image reconstruction model according to an exemplary embodiment of this application.

FIG. 8 is a schematic diagram of a training method of an image reconstruction model according to an exemplary embodiment of this application.

FIG. 9 is a framework diagram of generation of an image reconstruction model and image reconstruction according to an exemplary embodiment of this application.

FIG. 10 is a flowchart of an image reconstruction method according to an exemplary embodiment of this application.

FIG. 11 is a schematic diagram of an image reconstruction method according to an exemplary embodiment of this application.

FIG. 12 is a block diagram of a training apparatus of an image reconstruction model according to an exemplary embodiment of this application.

FIG. 13 is a schematic diagram of a structure of a computer device according to an exemplary embodiment of this application.

DETAILED DESCRIPTION

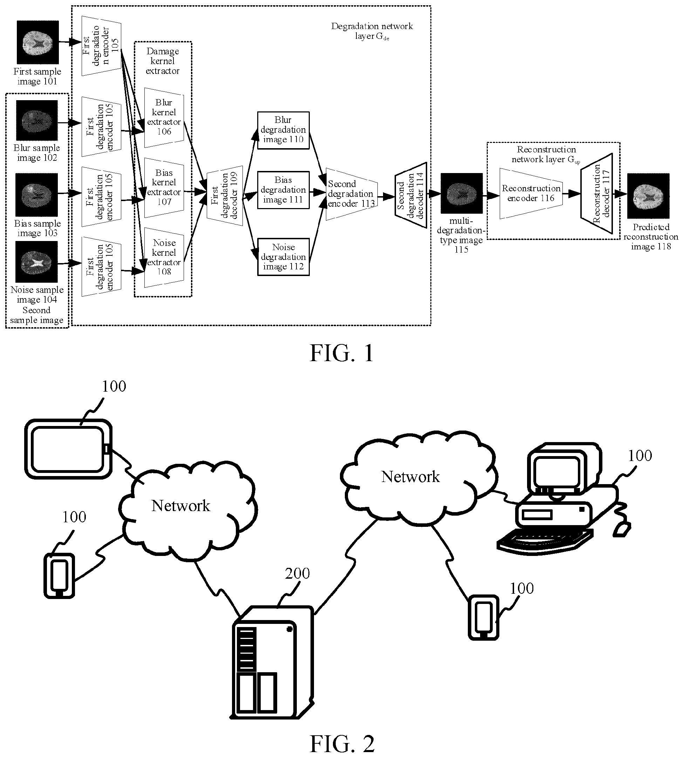

Embodiments of this application provide a technical solution of a training method of an image reconstruction model. As shown in FIG. 1, the method may be executed by a computer device, where the computer device may be a terminal or a server.

For example, the computer device obtains a first sample image 101 and at least two second sample images. The at least two second sample images include at least two of a blur sample image 102, a bias sample image 103, and a noise sample image 104. The second sample image is an image having a single type of damage, and image quality of the first sample image is greater than image quality of the second sample image.

In some embodiments, the damage type includes at least one of a blur damage type, a noise damage type, and a bias damage type. This is not specifically limited in this embodiment of this application.

In some embodiments, the image quality is measured by at least one of the following parameters : resolution, signal-to-noise ratio, color fidelity, visual information fidelity, contrast, dynamic range, distortion, peak signal-to-noise ratio, and structural similarity index. This is not specifically limited in this embodiment of this application.

For example, the first sample image 101 is an image having high-resolution, or an image that does not affect expression of image content, or an image that has a small impact on expression of the image content. The blur sample image 102 is an image having blur content in the image. The noise sample image 104 is image content that is unnecessary or has a negative impact on analysis and understanding of image content, that is, image noise, and the image is the noise sample image 104. The bias sample image 103 is an image causing a luminance difference due to bias. The blur damage type, the noise damage type, and the bias damage type of the second sample image all may be set randomly.

For example, the computer device extracts a first feature corresponding to the first sample image 101 by using a first degradation encoder 105, and respectively extracts at least two second features corresponding to the at least two second sample images.

The computer device extracts, based on the first feature and the second feature, a damage feature of the second feature by using a corresponding damage kernel extractor. The computer device adds the damage feature to the first feature of the first sample image 101, to obtain an intermediate first feature, and inputs the intermediate first feature to a first degradation decoder 109 for decoding processing, to obtain a single-degradation-type image corresponding to the first sample image. That is, the single-degradation-type image is an image having a single type of damage due to adding the damage feature into the first sample image. Adding the damaged feature to the first feature can mean element-wise addition of the damaged feature and the first feature, or weighted summation of the damaged feature and the first feature. This is not specifically limited in this embodiment of this application.

For example, the computer device extracts a feature of the first sample image 101 by using the first degradation encoder 105, to obtain the first feature. The computer device extracts features of the blur sample image 102, the noise sample image 104, and the bias sample image 103 respectively by using the first degradation encoder 105, to obtain a blur sample feature, a noise sample feature, and a bias sample feature respectively.

The computer device inputs the first feature and the blur sample feature to a blur kernel extractor 106 for feature extraction, to obtain a blur damage feature of the blur sample feature. The computer device inputs the first feature and the bias sample feature to a bias kernel extractor 107 for feature extraction, to obtain a bias damage feature of the bias sample feature. The computer device inputs the first feature and the noise sample feature to a noise kernel extractor 108 for feature extraction, to obtain a noise damage feature of the noise sample feature.

The computer device fuses the first feature corresponding to the first sample image 101 and the blur damage feature, to generate an intermediate first blur feature. The computer device performs decoding processing on the intermediate first blur feature by using the first degradation decoder 109, to generate a blur degradation image 110 corresponding to the first sample image 101.

The computer device fuses the first feature corresponding to the first sample image 101 and the bias damage feature, to generate an intermediate first bias feature. The computer device performs decoding processing on the intermediate first bias feature by using the first degradation decoder 109, to generate a bias degradation image 111 corresponding to the first sample image.

The computer device fuses the first feature corresponding to the first sample image 101 and the noise damage feature, to generate an intermediate first noise feature. The computer device performs decoding processing on the intermediate first noise feature by using the first degradation decoder 109, to generate a noise degradation image 112 corresponding to the first sample image.

For example, the computer device obtains at least two third features corresponding to the single-degradation-type images by using a second degradation encoder 113, and fuses the third features, to obtain a degradation fusion feature. The computer device performs decoding processing on the degradation fusion feature by using a second degradation decoder 114, to generate a multi-degradation-type image 115 corresponding to the first sample image 101. That is, the multi-degradation-type image 115 is an image having at least two types of damage due to fusing the at least two single-degradation-type images.

For example, the computer device performs feature extraction on the blur degradation image 110, the bias degradation image 111, and the noise degradation image 112 respectively by using the second degradation encoder 113, and performs feature fusion on a feature corresponding to the blur degradation image 110, a feature corresponding to the bias degradation image 111, and a feature corresponding to the noise degradation image 112, to obtain the degradation fusion feature. The computer device performs decoding processing on the degradation fusion feature by using the second degradation decoder 114, to generate the multi-degradation-type image 115 corresponding to the first sample image 101.

In some embodiments, a feature can be represented by a feature vector, a feature matrix, or a feature map. This is not specifically limited in this embodiment of this application.

In some embodiments, fusion of features represents a process for combining features to form a single feature. Specifically, fusion can represent combining features by at least one of the following methods: additive interaction, which indicates the element-wise addition of features; multiplicative interaction, which indicates the element-wise multiplication of features; feature concatenation, which indicates the direct joining of the features on a certain dimension (e.g., channel) to form a new feature; feature weighting, which indicates the weighted summation of the features to obtain a new feature; and attention mechanism, which indicates the calculation of attention weights for the features, and then the use of attention weights to perform a weighted summation of the features. This is not specifically limited in this embodiment of this application.

The computer device performs image reconstruction processing on the multi-degradation-type image based on a reconstruction encoder 116 and a reconstruction decoder 117 in a reconstruction network layer of the image reconstruction model, to generate a predicted reconstruction image 118 corresponding to the multi-degradation-type image 115.

For example, the computer device calculates a first loss function value based on the second feature corresponding to the second sample image and the third feature corresponding to the single-degradation-type image. The first loss function value includes a first blur loss function value, a first bias loss function value, and a first noise loss function value.

A loss function is used to assess the difference between the predicted/reconstructed image and the original image. The loss function value represents the calculated value of the difference. In some embodiments, the loss function value is at least one of a cross entropy, a mean square error, and an absolute difference. For example, the first loss function value is at least one of the cross entropy, the mean square error, and the absolute difference between the second feature and the third feature. As an example, the first loss function value is a value calculated by applying the Charbonnier loss function to the second feature and the third feature.

For example, the computer device calculates the first blur loss function value based on the second feature corresponding to the blur sample image 102 and the third feature corresponding to the blur degradation image 110. The computer device calculates the first bias loss function value based on the second feature corresponding to the bias sample image 103 and the third feature corresponding to the bias degradation image 111. The computer device calculates the first noise loss function value based on the second feature corresponding to the noise sample image 104 and the third feature corresponding to the noise degradation image 112. The first loss function value is used to measure a similarity between the second sample image and the single-degradation-type image corresponding to the second sample image.

For example, the computer device calculates a second loss function value based on the first feature corresponding to the first sample image 101 and a fourth feature corresponding to the predicted reconstruction image 118. The second loss function value is used to measure authenticity of the predicted reconstruction image.

For example, the computer device calculates a third loss function value based on a structural feature corresponding to the multi-degradation-type image 115 and a structural feature corresponding to the first sample image 101. The structural feature corresponding to the multi-degradation-type image 115 is a structural feature of a non-content part of the multi-degradation-type image 115. The third loss function value is used to measure a similarity between a non-content part in the multi-degradation-type image 115 and a non-content part in the first sample image 101.

For example, the computer device calculates a fourth loss function value based on a content feature and a texture feature that correspond to the first sample image 101 and a content feature and a texture feature that correspond to the predicted reconstruction image 118.

The fourth loss function value is used to measure a similarity between the first sample image and the predicted reconstruction image.

For example, the computer device updates a model parameter of the image reconstruction model based on a sum of the first loss function value, the second loss function value, the third loss function value, and the fourth loss function value.

In conclusion, the method provided in this embodiment, the first sample image and the three second sample images are obtained, the damage features each corresponding to one second sample image of three second sample images are added respectively to the first sample image in the degradation network layer, to generate three single-degradation-type images. The three single-degradation-type images are fused, to obtain the multi-degradation-type image corresponding to the first sample image. Then, image reconstruction processing is performed on the multi-degradation-type image in the reconstruction network layer, to generate the predicted reconstruction image corresponding to the multi-degradation-type image. The computer device calculates the loss function value based on the three second sample images, three single-degradation-type images, the first sample image, and the predicted reconstruction image; and updates the model parameter of the image reconstruction model based on the loss function value. According to the training method of the image reconstruction model provided in this application, the image damage of a plurality of types of damage is simultaneously performed on the first sample image, to obtain the multi-degradation-type image corresponding to the first sample image, and the multi-degradation-type image having the plurality of types of damage is reconstructed through the reconstruction network layer. When the model obtained through training by using the foregoing method is used, damaged parts with a plurality of types of a low-quality image may be simultaneously reconstructed. This avoids an accumulated error caused by reconstructing the damaged parts of the low-quality image in sequence, and further improves image reconstruction precision of a trained image reconstruction model.

FIG. 2 is a schematic diagram of an architecture of a computer system according to an embodiment of this application. The computer system may include a terminal 100 and a server 200.

The terminal 100 may be an electronic device such as a mobile phone, a tablet computer, an in-vehicle terminal (in-vehicle infotainment), a wearable device, a personal computer (PC), an intelligent voice interaction device, a smart home appliance, an aerial vehicle, or an unmanned vending terminal. A client running a target application may be installed in the terminal 100. The target application may be an application for image reconstruction, or may be another application that provides an image reconstruction function. This is not limited in this application. In addition, a form of the target application is not limited in this application, and includes but is not limited to an application (App), an applet, and the like that are installed in the terminal 100, or may be in a form of a web page.

The server 200 may be an independent physical server, or a server cluster or a distributed system composed of a plurality of physical servers, or may alternatively be a cloud server that provides a cloud computing service, a cloud database, cloud computing, a cloud function, cloud storage, a network service, cloud communication, a middleware service, a domain name service, a security service, a content delivery network (CDN), and a basic cloud computing service such as big data and an artificial intelligence platform. The server 200 may be a back-end server of the foregoing target application, and is configured to provide a background service for a client of the target application.

A cloud technology (Cloud technology) is a hosting technology that unifies a series of resources such as hardware, software, and a network in a wide area network or a local area network, to implement data computing, storage, processing, and sharing. A general term for a network technology, an information technology, an integration technology, a management platform technology, and an application technology that are applied based on a cloud computing business model. The cloud technology can form resource pools and be used on demand. A cloud computing technology is an important support. A background service of a technical network system needs a large quantity of computing and storage resources, such as a video website, an image website, and more portal websites. With the development and application of the internet industry, each item may have identification flag and needs to be transmitted to the background system for logic processing. Data of different levels is processed separately. Various industry data needs powerful system support, and this be implemented only through cloud computing.

In some embodiments, the server may be alternatively implemented as a node in a blockchain system. Blockchain (Blockchain) is a new application mode of a computer technology such as distributed data storage, point-to-point transmission, consensus mechanism, and an encryption algorithm. The blockchain is essentially a decentralized database, and is a string of a data block generated in a cryptographic manner. Each data block contains information about a batch of network transactions, which is used to verify validity of the information (anti-counterfeiting) and generate a next block. The blockchain may include a blockchain underlying platform, a platform product service layer, and an application service layer.

The terminal 100 and the server 200 may communicate with each other by using a network, for example, a wired or wireless network.

According to a training method of an image reconstruction model provided in embodiments of this application, operations may be performed by a computer device, and the computer device is an electronic device having a data calculation, processing, and storage capability. A solution implementation environment shown in FIG. 2 is used as an example. The terminal 100 may perform the training method of the image reconstruction model or an image reconstruction method (for example, the client of the target application installed and running on the terminal 100 performs the training method of the image reconstruction model or the image reconstruction method). Alternatively, the server 200 may perform the training method of the image reconstruction model or the image reconstruction method, or the terminal 100 and the server 200 interact and cooperate to perform the training method of the image reconstruction model or the image reconstruction method. This is not limited in this application.

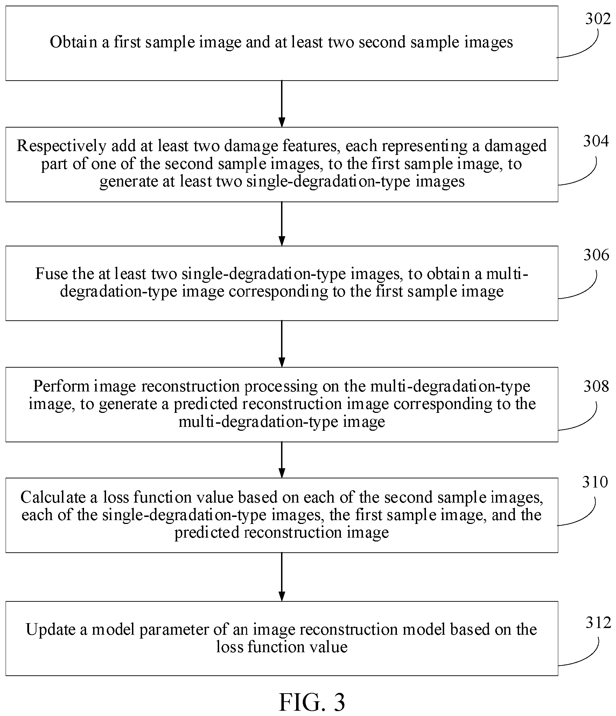

FIG. 3 is a flowchart of a training method of an image reconstruction model according to an exemplary embodiment of this application. The method may be executed by a computer device, where the computer device may be the terminal 100 or the server 200 in FIG. 2. The method includes the following operations.

Operation 302: Obtain a first sample image and at least two second sample images.

Each of the second sample images has a damaged part with a single type of damage, and image quality of the first sample image is greater than image quality of each of the second sample images. The single damage type means that only one damage type is included. The damage type includes image blur, image bias, image noise, and the like. In some embodiments, the second sample image is obtained by performing an image degradation operation on the first sample image. In this case, the first sample image and the second sample image are different only in the image quality. In some embodiments, the second sample image is obtained by performing an image quality enhancement operation on the first sample image. In this case, the first sample image and the second sample image are different only in the image quality.

In some embodiments, the first sample image and the second sample image are obtained by photographing a same object by using different photographing parameters. In this case, the first sample image and the second sample image are different only in the image quality. The first sample image is obtained through photographing by using a correct photographing parameter, and the second sample image is obtained through photographing by using an incorrect photographing parameter. The correct photographing parameter and the incorrect photographing parameter respectively correspond to a high-quality image and a low-quality image.

For example, the first sample image is a high-resolution image, and the second sample image is a low-resolution image. The image in embodiments of this application may be a biological or non-biological internal tissue image that cannot be directly seen by human eyes and that is obtained in a non-intrusive manner. For example, in the biomedicine field, the image in embodiments of this application may be a biological image (for example, a medical image). The biological image is an image that is of an internal tissue of an organism or a part of the organism (for example, a human body or a part of the human body) and that is obtained in the non-intrusive manner for medicine or medical research. In an example, for the medical field, the image in embodiments of this application may be an image of a heart and a lung, a liver, a stomach, a large intestine and a small intestine, a human brain, a bone, a blood vessel, or the like; or may be an image of a non-human organ such as a tumor. In addition, the image in embodiments of this application may be an image generated based on an imaging technology such as an X-ray (X-ray) technology, a computed tomography (CT) technology, a positron emission tomography (PET) technology, a nuclear magnetic resonance imaging (NMRI) technology, or medical ultrasonography (Medical Ultrasonography). In addition, the image in embodiments of this application may alternatively be a what you see is what you get image generated by using a visual imaging technology, for example, an image photographed by using a camera lens (for example, a camera lens of a camera or a camera lens of a terminal).

Operation 304: Respectively add at least two damage features, each representing the damaged part of one of the second sample images, to the first sample image, to generate at least two single-degradation-type images.

A feature is a corresponding (essential) trait or characteristic that distinguishes one type of object from another type of object, or a set of the traits or the characteristics. In a possible implementation, the computer device may perform feature extraction on an image by using a machine learning model. For example, an encoder may use one or multiple layers of a neural network to map the input image data to obtain an output vector, which serves as a feature extracted from the input image data. The damage feature is a feature corresponding to a damaged part of the second sample image, for example, a feature corresponding to a blur part of the second sample image, and a feature corresponding to a noise part of the second sample image.

For example, the computer device extracts the at least two damage features corresponding to the second sample images, and respectively adds the damage feature corresponding to each second sample image to the first sample image, to generate the single-degradation-type image, so that the generated single-degradation-type image includes a damage feature that is the same as or similar to that of the second sample image. The single-degradation-type image is an image obtained by adding the single damage type to the first sample image. For example, the computer device extracts a blur damage feature corresponding to the second sample image, and adds the blur damage feature to the first sample image, to obtain a blur degradation image corresponding to the first sample image.

Operation 306: Fuse the at least two single-degradation-type images, to obtain a multi-degradation-type image corresponding to the first sample image.

The multi-degradation-type image is an image having at least two types of damage. For example, the computer device fuses the at least two single-degradation-type images, to obtain an image having a plurality of types of damage. For example, the single-degradation-type image is a blur degradation image, a bias degradation image, and a noise degradation image. The computer device fuses the blur degradation image, the bias degradation image, and the noise degradation image, to generate the multi-degradation-type image, so that the generated multi-degradation-type image has the same or similar blur damage feature, noise damage feature, and bias damage feature.

Operation 308: Perform image reconstruction processing on the multi-degradation-type image, to generate a predicted reconstruction image corresponding to the multi-degradation-type image.

The image reconstruction processing means processing a damage feature of the multi-degradation-type image, for example, to reduce or remove the blur damage feature, the noise damage feature, and the bias damage feature of the multi-degradation-type image. The predicted reconstruction image is an image obtained by reducing or removing the damage feature of the multi-degradation-type image.

For example, the computer device performs reconstruction processing on the multi-degradation-type image, to reduce or remove the blur damage feature, the noise damage feature, and the bias damage feature of the multi-degradation-type image, to generate the predicted reconstruction image corresponding to the multi-degradation-type image.

For example, the image reconstruction processing may include: applying a denoising algorithm (such as median filtering or Gaussian filtering) to the pixel intensity values of the image to reduce or remove the noise damage feature; applying a deblurring technique (e.g., Wiener filtering or blind deconvolution) to the spatial frequency components or blurred pixel intensity values of the image to reduce or remove the blur damage feature; or applying a correction method (such as histogram equalization) to the overall brightness distribution or contrast of the image to reduce or remove the bias damage feature.

Operation 310: Calculate a loss function value based on each of the second sample images, each of the single-degradation-type images, the first sample image, and the predicted reconstruction image.

The loss function value obtained through calculation based on the second sample image, the single-degradation-type image, the first sample image, and the predicted reconstruction image may be used to measure a training effect of the image reconstruction model. In some embodiments, the loss function value is at least one of a cross entropy, a mean square error, and an absolute difference, but is not limited thereto. This is not limited in embodiments of this application.

Operation 312: Update a model parameter of the image reconstruction model based on the loss function value.

Updating of the model parameter refers to updating a network parameter in the image reconstruction model, or updating a network parameter of each network module in the model, or updating a network parameter of each network layer in the model. However, this is not limited thereto. This is not limited in embodiments of this application.

In some embodiments, the model parameter of the image reconstruction model is adjusted based on the loss function value of the image reconstruction model until the image reconstruction model or a training system of the image reconstruction model meets a training stop condition, to obtain a trained image reconstruction model. In some embodiments, before the image reconstruction model or the training system of the image reconstruction model meets the training stop condition, a model parameter of another learning model in the training system of the image reconstruction model is also continuously adjusted based on a training loss.

In conclusion, according to the method provided in this embodiment, the first sample image and the at least two second sample images are obtained. The computer device respectively adds the at least two damage features corresponding to the second sample images to the first sample image, to generate at least two single-degradation-type images. The computer device fuses the at least two single-degradation-type images, to obtain the multi-degradation-type image corresponding to the first sample image; and performs the image reconstruction processing on the multi-degradation-type image, to generate the predicted reconstruction image corresponding to the multi-degradation-type image. The computer device calculates the loss function value based on the second sample image, the single-degradation-type image, the first sample image, and the predicted reconstruction image. The computer device updates the model parameter of the image reconstruction model based on the loss function value. According to the training method of the image reconstruction model provided in this application, the image damage of a plurality of types of damage is simultaneously performed on the first sample image, to obtain the multi-degradation-type image corresponding to the first sample image, and the multi-degradation-type image having the plurality of types of damage is reconstructed through a reconstruction network layer. When the model obtained through training by using the foregoing method is used, a plurality of types of damage of a low-quality image may be simultaneously reconstructed. This avoids an accumulated error caused by reconstructing the damaged parts of the low-quality image in sequence, and further improves image reconstruction precision of the trained image reconstruction model.

An embodiment of this application provides an image reconstruction model. The image reconstruction model includes a degradation network layer and a reconstruction network layer.

A computer device obtains a first sample image and at least two second sample images; respectively adds, through the degradation network layer, at least two damage features corresponding to the second sample images to the first sample image, to generate at least two single-degradation-type images; and fuses the at least two single-degradation-type images, to obtain a multi-degradation-type image corresponding to the first sample image. The computer device performs image reconstruction processing on the multi-degradation-type image through the reconstruction network layer, to generate a predicted reconstruction image corresponding to the multi-degradation-type image.

Based on the image reconstruction model, the following training method of the image reconstruction model is provided.

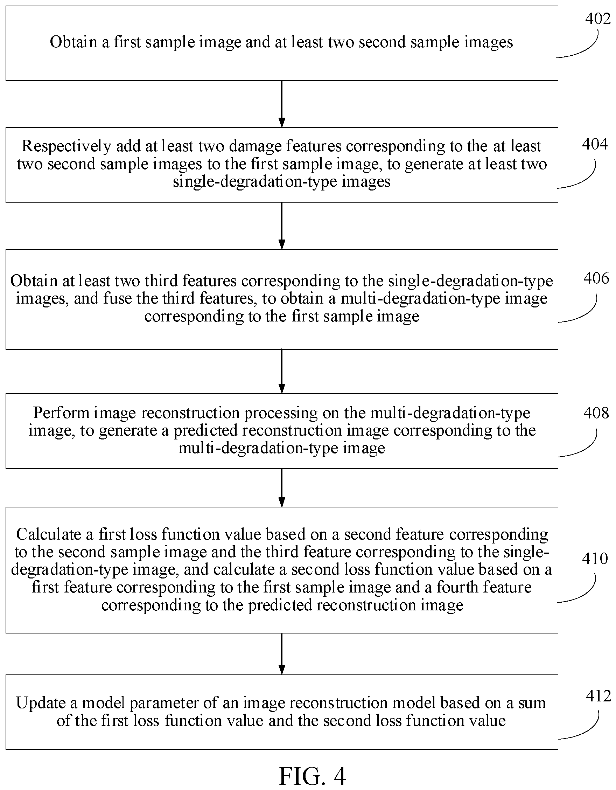

FIG. 4 is a flowchart of a training method of an image reconstruction model according to an exemplary embodiment of this application. The method may be executed by a computer device, where the computer device may be the terminal 100 or the server 200 in FIG. 2. The method includes the following operations.

Operation 402: Obtain a first sample image and at least two second sample images.

The first sample image is an image having a high-resolution, or having a damage type but does not affect expression of image content, or having a damage type but having a small impact on expression of image content. The second sample image is an image having a single type of damage, and image quality of the first sample image is greater than image quality of the second sample image.

In some embodiments, the damage type includes at least one of a blur damage type, a noise damage type, and a bias damage type. This is not limited in this embodiment of this application.

The second sample image may be any one of a blur sample image, a noise sample image, or a bias sample image. The blur sample image is an image having blur content in the image. The noise sample image is image content that is unnecessary or has a negative impact on analysis and understanding of image content, that is, image noise, and the image is the noise sample image. The bias sample image is an image causing a luminance difference due to bias. For example, an artifact (that is, image noise) generated due to interference of a metal object usually occurs in a medical image. This may affect determining of a doctor.

Operation 404: Respectively add at least two damage features corresponding to the at least two second sample images to the first sample image, to generate at least two single-degradation-type images.

The damage feature is a feature corresponding to a damaged part of the second sample image, for example, a feature corresponding to a blur part of the second sample image, and a feature corresponding to a noise part of the second sample image.

The single-degradation-type image is an image obtained by adding the single damage type to the first sample image.

For example, the computer device obtains a first feature corresponding to the first sample image, and respectively obtains at least two second features corresponding to the at least two second sample images. The computer device obtains, based on the first feature and the second feature, the damage feature corresponding to the second sample image. The computer device adds the damage feature to the first feature of the first sample image, to obtain the single-degradation-type image corresponding to the first sample image. The first feature represents an image feature of the first sample image, and the second feature represents an image feature of the second sample image.

For example, the image reconstruction model includes a degradation network layer, and the degradation network layer includes a first degradation encoder, a damage kernel extractor, and a first degradation decoder.

The computer device extracts the first feature corresponding to the first sample image by using the first degradation encoder, and respectively extracts at least two second features corresponding to the at least two second sample images.

The computer device determines the damage feature by comparing the first feature and the second feature, and performs decoupling by using the damage kernel extractor, to obtain, from the second feature, the damage feature corresponding to the second sample image. The computer device adds the damage feature to the first feature of the first sample image, to obtain an intermediate first feature; and inputs the intermediate first feature to the first degradation decoder for decoding processing, to obtain the single-degradation-type image corresponding to the first sample image.

For example, the second sample image is a blur sample, a noise sample image, and a bias sample image. The computer device extracts a feature of the first sample image by using the first degradation encoder, to obtain the first feature. The computer device extracts features of the blur sample image, the noise sample image, and the bias sample image respectively by using the first degradation encoder, to obtain a blur sample feature, a noise sample feature, and a bias sample feature respectively.

The computer device inputs the first feature and the blur sample feature to a blur kernel extractor for feature extraction, to obtain a blur damage feature of the blur sample feature. The computer device inputs the first feature and the bias sample feature to a bias kernel extractor for feature extraction, to obtain a bias damage feature of the bias sample feature. The computer device inputs the first feature and the noise sample feature to a noise kernel extractor for feature extraction, to obtain a noise damage feature of the noise sample feature.

The computer device fuses the first feature corresponding to the first sample image and the blur damage feature, to generate an intermediate first blur feature. The computer device performs decoding processing on the intermediate first blur feature by using the first degradation decoder, to generate a blur degradation image corresponding to the first sample image.

The computer device fuses the first feature corresponding to the first sample image and the bias damage feature, to generate an intermediate first bias feature. The computer device performs decoding processing on the intermediate first bias feature by using the first degradation decoder, to generate a bias degradation image corresponding to the first sample image.

The computer device fuses the first feature corresponding to the first sample image and the noise damage feature, to generate an intermediate first noise feature. The computer device performs decoding processing on the intermediate first noise feature by using the first degradation decoder, to generate a noise degradation image corresponding to the first sample image.

Operation 406: Obtain at least two third features corresponding to the single-degradation-type images, and fuse the third features, to obtain the multi-degradation-type image corresponding to the first sample image.

The multi-degradation-type image is an image having at least two types of damage.

The third feature represents an image feature of the single-degradation-type image.

For example, the degradation network layer of the image reconstruction model further includes a second degradation encoder and a second degradation decoder. The computer device obtains the at least two third features corresponding to the single-degradation-type images by using the second degradation encoder, and fuses the third features, to obtain a degradation fusion feature. The computer device performs decoding processing on the degradation fusion feature by using the second degradation decoder, to generate the multi-degradation-type image corresponding to the first sample image.

For example, the single-degradation-type image is a blur degradation image, a bias degradation image, and a noise degradation image. The computer device performs feature extraction on the blur degradation image, the bias degradation image, and the noise degradation image respectively by using the second degradation encoder, and performs feature fusion on a feature corresponding to the blur degradation image, a feature corresponding to the bias degradation image, and a feature corresponding to the noise degradation image, to obtain a degradation fusion feature. The computer device performs decoding processing on the degradation fusion feature by using the second degradation decoder, to generate the multi-degradation-type image corresponding to the first sample image.

Operation 408: Perform image reconstruction processing on the multi-degradation-type image, to generate a predicted reconstruction image corresponding to the multi-degradation-type image.

The image reconstruction processing means processing a damage feature of the multi-degradation-type image, to reduce or remove the blur damage feature, the noise damage feature, and the bias damage feature of the multi-degradation-type image.

The predicted reconstruction image is an image obtained by reducing or removing the damage feature of the multi-degradation-type image.

For example, the image reconstruction model includes a reconstruction network layer, and the reconstruction network layer includes a reconstruction encoder and a reconstruction decoder. The computer device inputs the multi-degradation-type image to the reconstruction encoder for feature extraction, to obtain an image reconstruction feature. The computer device performs decoding processing on the image reconstruction feature by using the reconstruction decoder, to generate the predicted reconstruction image corresponding to the multi-degradation-type image.

Operation 410: Calculate a first loss function value based on the second feature corresponding to the second sample image and the third feature corresponding to the single-degradation-type image, and calculate a second loss function value based on the first feature corresponding to the first sample image and a fourth feature corresponding to the predicted reconstruction image.

The fourth feature represents an image feature of the predicted reconstruction image.

The first loss function value and the second loss function value that are obtained through calculation based on the second sample image, the single-degradation-type image, the first sample image, and the predicted reconstruction image may be used to measure a training effect of the image reconstruction model.

In some embodiments, the loss function value is at least one of a cross entropy, a mean square error, and an absolute difference, but is not limited thereto. This is not limited in embodiments of this application.

The first loss function value is used to measure a similarity between the second sample image and the single-degradation-type image corresponding to the second sample image.

For example, the computer device calculates the first loss function value based on the second feature corresponding to the second sample image and the third feature corresponding to the single-degradation-type image. The first loss function value includes a first blur loss function value, a first bias loss function value, and a first noise loss function value.

In some embodiments, the computer device calculates the first loss function value based on a second feature corresponding to an $i^{th}$ second sample image of the at least two second sample images and a third feature corresponding

to an i<sup>th</sup> single-degradation-type image of the at least two single-degradation-type images, where i is a positive integer.

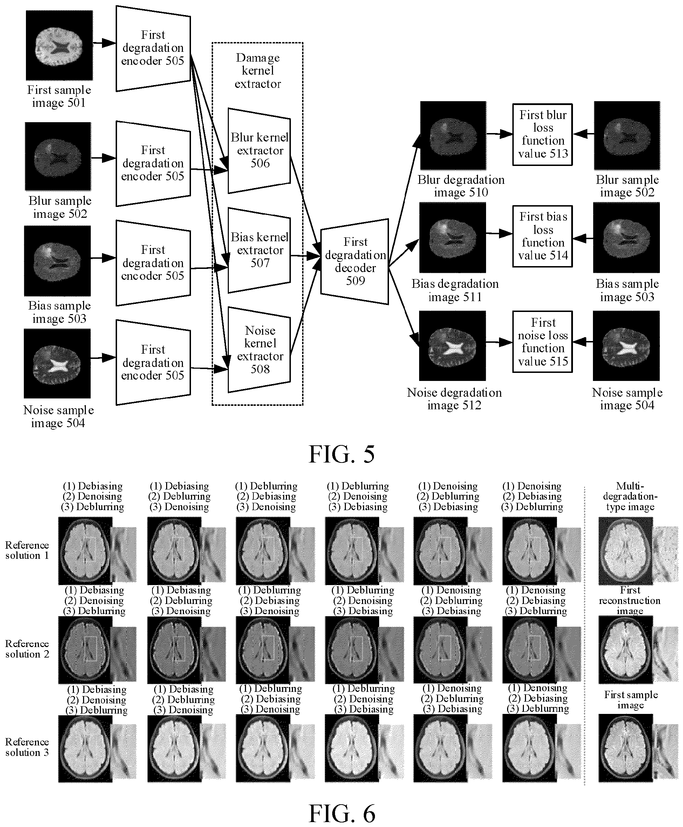

For example, as shown in FIG. 5, a computer device extracts a feature of a first sample image 501 by using a first degradation encoder 505, to obtain a first feature. The computer device extracts features of a blur sample image 502, a noise sample image 504, and a bias sample image 503 respectively by using the first degradation encoder 505, to obtain a blur sample feature, a noise sample feature, and a bias sample feature respectively. The computer device inputs the first feature and the blur sample feature to a blur kernel extractor 506 for feature extraction, to obtain a blur damage feature of the blur sample feature. The computer device inputs the first feature and the bias sample feature to a bias kernel extractor 507 for feature extraction, to obtain a bias damage feature of the bias sample feature. The computer device inputs the first feature and the noise sample feature to a noise kernel extractor 508 for feature extraction, to obtain a noise damage feature of the noise sample feature.

The computer device fuses the first feature corresponding to the first sample image 501 and the blur damage feature, to generate an intermediate first blur feature. The computer device performs decoding processing on the intermediate first blur feature by using a first degradation decoder 509, to generate a blur degradation image 510 corresponding to the first sample image 501. The computer device fuses the first feature corresponding to the first sample image 501 and the bias damage feature, to generate an intermediate first bias feature. The computer device performs decoding processing on the intermediate first bias feature by using the first degradation decoder 509, to generate a bias degradation image 511 corresponding to the first sample image 501. The computer device fuses the first feature corresponding to the first sample image 501 and the noise damage feature, to generate an intermediate first noise feature. The computer device performs decoding processing on the intermediate first noise feature by using the first degradation decoder 509, to generate a noise degradation image 512 corresponding to the first sample image 501.

The computer device calculates a first blur loss function value 513 based on a second feature corresponding to the blur sample image 502 and the third feature corresponding to the blur degradation image 510.

The computer device calculates a first bias loss function value 514 based on a second feature corresponding to the bias sample image 503 and a third feature corresponding to the bias degradation image 511.

The computer device calculates a first noise loss function value 515 based on a second feature corresponding to the noise sample image 504 and a third feature corresponding to the noise degradation image 512.

For example, a calculation formula of the first loss function value may be represented as:

$$\mathcal{L}_{de} = \sum_{i=1}^{N} \sum_{r=1}^{R} E\left(y_i^{(r)}, \Psi\left(x_i, K\left(x_i, y_i^{(r)}\right)\right)\right);$$

In the formula,

$$\mathcal{L}_{de}$$

is the first loss function value, N is a quantity of data groups, R is a quantity of types of damage, r represents the damage type, x is the first sample image, y is the second sample image, K is the damage kernel extractor, $\Psi$ is the first degradation decoder, and E is a Charbonnier loss function.

The second loss function value is used to measure authenticity of the predicted reconstruction image.

For example, the computer device calculates the second loss function value based on the first feature corresponding to the first sample image and the fourth feature corresponding to the predicted reconstruction image.

To make a generated image closer to a real image, in embodiments of this application, a generative adversarial idea is used, and the first sample image and the predicted reconstruction image are input to a discriminator for discrimination, to obtain a discrimination result. The discriminator is configured to discriminate the first sample image and the predicted reconstruction image. An adversarial loss is determined based on the discrimination result, that is, the second loss function value is determined. Finally, when the discriminator cannot distinguish whether the given image is the first sample image or the predicted reconstruction image, that is, the predicted reconstruction image is close to the first sample image, training is completed.

For example, a calculation formula of the second loss function value may be represented as:

$$\mathcal{L}_{up} = E\left[log\, D_{up}(x)\right] + E\left[log(1 - D_{up}(G_{up}(\hat{y})))\right];$$

In the formula,

$$\mathscr{L}_{up}$$

is the second loss function value, E is the Charbonnier loss function, $D_{up}$ is the discriminator, x is the first sample image, $\hat{y}$ is the multi-degradation-type image, and is $G_{up}$ a reconstruction network layer.

In a possible implementation, the loss function value further includes a third loss function value and a fourth loss function value.

The third loss function value is used to measure a similarity between a non-content part in the multi-degradation-type image and a non-content part in the first sample image.

For example, the third loss function value is calculated based on a structural feature corresponding to the multi-degradation-type image and a structural feature corresponding to the first sample image.

For example, a calculation formula of the third loss function value may be represented as:

$$\mathscr{L}_{cde} = \left\| T_{de}^{l}(\hat{y}_i) - T_{de}^{l}(x_i) \right\|_1^1 ;$$

In the formula,

$$\mathscr{L}_{cde}$$

is the third loss function value, $x_i$ is an $i^{th}$ first sample image, $\hat{y}_i$ is the $i^{th}$ multi-degradation-type image, and $T_{de}^{l}$ is a feature representation of an $l^{th}$ layer of the image.

The fourth loss function value is used to measure a similarity between the first sample image and the predicted reconstruction image.

For example, the fourth loss function value is calculated based on a content feature and a texture feature that correspond to the first sample image and a content feature and a texture feature that correspond to the predicted reconstruction image. In some embodiments, the content feature is a pixel value of each pixel in the image, for example, luminance and brightness of each pixel.

For example, a calculation formula of the fourth loss function value may be represented as:

$$\mathscr{L}_{TS} = \mathscr{L}_{cup}\left(G_{up}, \hat{x}_i, x_i\right) + \lambda \mathscr{L}_{texture}\left(G_{up}, \hat{x}_i, x_i\right);$$

In the formula,

$$\mathscr{L}_{TS}$$

is the fourth loss function value, $x_i$ is the $i^{th}$ first sample image, $\hat{x}_i$ is an $i^{th}$ predicted reconstruction image, $G_{up}$ is the reconstruction network layer,

$$\mathscr{L}_{cup}$$

is a content loss function value,

$$\mathscr{L}_{texture}$$

is a texture loss function value, and $\lambda$ is a weight value. For example, $\lambda$ is 0.9.

Operation 412: Update a model parameter of the image reconstruction model based on a sum of the first loss function value and the second loss function value.

Updating of the model parameter refers to updating a network parameter in the image reconstruction model, or updating a network parameter of each network module in the model, or updating a network parameter of each network layer in the model. However, this is not limited thereto. This is not limited in embodiments of this application.

In a possible implementation, the computer device updates the model parameter of the image reconstruction model based on a sum of the first loss function value, the second loss function value, the third loss function value, and the fourth loss function value.

For example, a linear combination constructed based on the sum of the first loss function value, the second loss function value, the third loss function value, and the fourth loss function value may be represented as:

$$\mathcal{L} = \mathcal{L}_{de} + \alpha \mathcal{L}_{cde} + \mathcal{L}_{up} + \beta \mathcal{L}_{TS};$$

In the formula,

$$\mathcal{L}$$

is the loss function value,

$$\mathcal{L}_{de}$$

is the first loss function value,

$$\mathcal{L}_{cde}$$

is the third loss function value,

$$\mathcal{L}_{up}$$

is the second loss function value,

$$\mathcal{L}_{TS}$$

is the fourth loss function value, and $\alpha$ and $\beta$ are weight factors. For example, $\alpha=400$, and $\beta=100$.

The model parameter of the image reconstruction model includes at least one of a network parameter of the first degradation encoder, a network parameter of the damage kernel extractor, a network parameter of the first degradation decoder, a network parameter of the second degradation encoder, and a network parameter of the second degradation decoder, a network parameter of the reconstruction encoder, and a network parameter of the reconstruction decoder.

When the loss function value is obtained, the computer device updates, based on the loss function value, the network parameter of the first degradation encoder, the network parameter of the damage kernel extractor, the network parameter of the first degradation decoder, the network parameter of the second degradation encoder, and the network parameter of the second degradation decoder, the network parameter of the reconstruction encoder, and the network parameter of the reconstruction decoder that are of the image reconstruction model, to obtain an updated first degradation encoder, an updated damage kernel extractor, an updated first degradation decoder, an updated second degradation encoder, an updated second degradation decoder, an updated reconstruction encoder, and an updated reconstruction decoder, and to obtain the trained image reconstruction model.

In some embodiments, updating of the model parameter of the image reconstruction model includes that network parameters of all network modules in the image reconstruction model are updated, or network parameters of some network modules of the image reconstruction model are fixed, and network parameters of only remaining network modules are updated. For example, when the model parameter of the image reconstruction model is updated, the network parameter of the first degradation encoder, network parameter of the second degradation encoder, and the network parameter of the reconstruction encoder that are of the image reconstruction model are fixed, and only the network parameter of the damage kernel extractor, the network parameter of the first degradation decoder, the network parameter of the second degradation decoder, and the network parameter of the reconstruction decoder are updated.

In conclusion, according to the method provided in this embodiment, the first sample image and the at least two second sample images are obtained. The computer device respectively adds the at least two damage features corresponding to the second sample images to the first sample image, to generate at least two single-degradation-type images. The computer device fuses the at least two single-degradation-type images, to obtain the multi-degradation-type image corresponding to the first sample image; and performs image reconstruction processing on the multi-degradation-type image, to generate the predicted reconstruction image corresponding to the multi-degradation-type image. The computer device calculates the first loss function value, the second loss function value, the third loss function value, and the fourth loss function value based on the second sample image, the single-degradation-type image, the first sample image, and the predicted reconstruction image. The computer device updates the model parameter of the image reconstruction model based on a sum of the first loss function value, the second loss function value, the third loss function value, and the fourth loss function value. According to the training method of the image reconstruction model provided in this application, the image damage of a plurality of types of damage is simultaneously performed on the first sample image, to obtain the multi-degradation-type image corresponding to the first sample image, and the multi-degradation-type image having the plurality of types of damage is reconstructed through the reconstruction network layer. When the model obtained through training by using the foregoing method is used, a plurality of types of damage of a low-quality image may be simultaneously reconstructed. This avoids an accumulated error caused by reconstructing the damaged parts of the low-quality image in sequence, and further improves image reconstruction precision of the trained image reconstruction model.

FIG. 6 is a schematic diagram of a reconstruction effect of an image reconstruction model according to an exemplary embodiment of this application.

In the medical field, a medical image is an important auxiliary tool for medical auxiliary diagnosis. Image reconstruction is performed on the medical image, and detailed information in the medical image is displayed more clearly based on an image reconstruction result, so that medical personnel can better assist in the medical diagnosis. As shown in FIG. 6, comparison effects between the solutions and the reference solutions that are provided in this application are compared by designing a comparison experiment. An MNIST data set is used in the experiment. The reference solutions include a reference solution 1, a reference solution 2, and a reference solution 3. In the reference solution, denoising processing, deblurring processing and debiasing processing are performed on a multi-degradation-type image, but a processing sequence is different.

For example, in the reference solution 1, denoising processing, deblurring processing, and debiasing processing are performed on the multi-degradation-type image by selecting different processing sequences, to finally obtain six groups of image reconstruction results. The six groups of image reconstruction results in the reference solution 1 are compared with a first sample image, and a predicted reconstruction image obtained based on the solution provided in this application is compared with the first sample image, to obtain that the solution provided in this application can generate a more realistic image reconstruction result having a higher visual effect for the medical image.

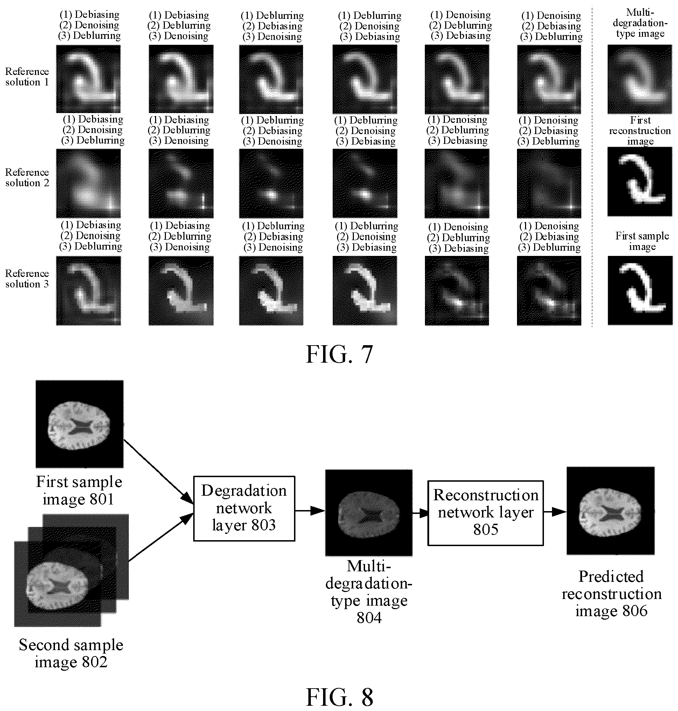

In the field of image defect repair, a high-quality image can reflect the more realistic view, and provide the higher visual effect. As shown in FIG. 7, the comparison effects between the solutions and the reference solutions that are provided in this application are compared by designing the comparison experiment. The MNIST data set is used in the experiment. The reference solutions include the reference solution 1, the reference solution 2, and the reference solution 3. In the reference solution, denoising processing, deblurring processing and debiasing processing are performed on the multi-degradation-type image, but the processing sequence is different.

For example, for different reference solutions, denoising processing, deblurring processing, and debiasing processing are performed on the multi-degradation-type image by selecting different processing sequences, to finally obtain six groups of image reconstruction results for each reference solution. The six groups of image reconstruction results in different reference solutions are compared with the first sample image, and the predicted reconstruction image obtained based on the solution provided in this application is compared with the first sample image, to obtain that the solution provided in this application can achieve a better defect repair effect for a defective image.

FIG. 8 is a schematic diagram of a training method of an image reconstruction model according to an exemplary embodiment of this application. The method may be executed by a computer device, where the computer device may be the terminal 100 or the server 200 in FIG. 2. The method includes the following operations.

In the medical field, a medical image is an important auxiliary tool for medical auxiliary diagnosis. Image reconstruction is performed on the medical image, and detailed information in the medical image is displayed more clearly based on an image reconstruction result, so that medical personnel can better assist in the medical diagnosis. As shown in FIG. 8, a first sample image 801 and at least two second sample images 802 are input to a degradation network layer 803 to perform image degradation operation on the first sample image 801, to obtain an image reconstruction result, that is, a multi-degradation-type image 804.

Image degradation refers to that in a process of forming, recording, processing, and transmitting an image, image quality deteriorates due to imperfection of an imaging system, a recording device, transmission media, and a processing method. This phenomenon refers to as image degradation.

In this embodiment of this application, image degradation processing performed on the first sample image 801 is to simultaneously add a plurality of types of damage to the first sample image 801 simultaneously. For example, random blurring processing, random noising processing, and random bias processing are added to the first sample image 801, that is, a plurality of types of defects are added to the first sample image 801.

When image reconstruction is performed on the multi-degradation-type image 804, a reconstruction network layer 805 simultaneously reconstructs the plurality of types of defects of the multi-degradation-type image 804, that is, deblurring, denoising, and debiasing. The reconstruction network layer 805 reconstructs the multi-degradation-type image 804 into a high-quality image, that is, a predicted reconstruction image 806.

In the image reconstruction processing, accuracy of the image reconstruction affects accuracy of information display in the medical image, and further affects accuracy of the medical diagnosis performed by medical personnel based on display information. Therefore, in a medical image-assisted diagnosis scenario, the image reconstruction model obtained by using the training method of the image reconstruction model provided in this application can improve the accuracy of the image reconstruction performed on the medical image, display more clearly detailed information in the medical image, and improve accuracy of medical-assisted diagnosis.

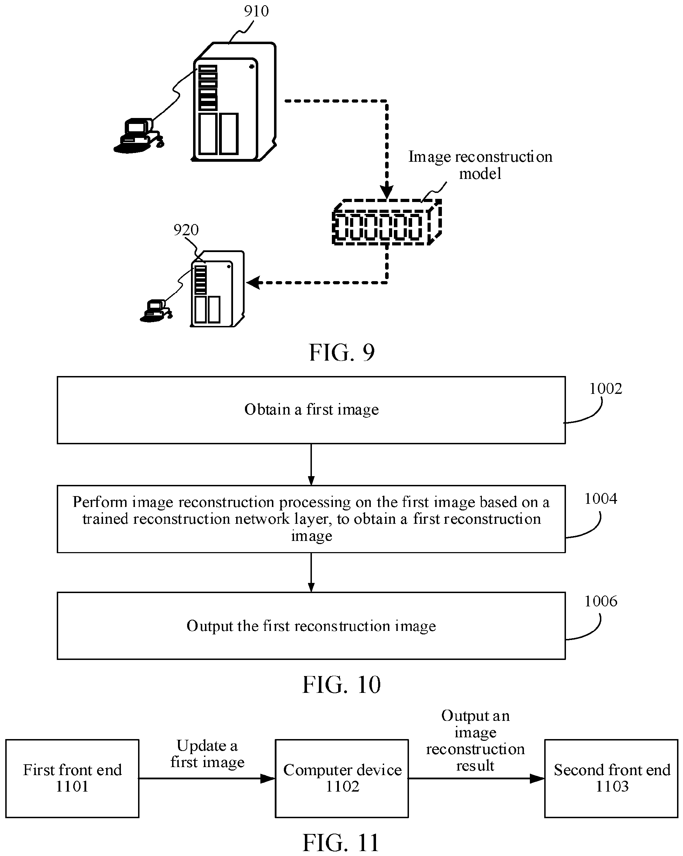

The training method of the image reconstruction model in this application may be implemented based on the image reconstruction model. The solution includes a generation phase of an image reconstruction model and an image reconstruction phase. FIG. 9 is a framework diagram of generation of an image reconstruction model and image reconstruction according to an exemplary embodiment of this application. As shown in FIG. 9, in a generation phase of an image reconstruction model, after obtaining an image reconstruction model by using a preset training sample data set (including a first sample image and at least two second sample images), a device 910 for generating an image reconstruction model generates an image reconstruction result based on the image reconstruction model. In an image reconstruction phase, an image reconstruction device 920 processes an input first image based on the image reconstruction model, to obtain an image reconstruction result of the first image.

The device 910 for generating an image reconstruction model and the image reconstruction device 920 may be a computer device. For example, the computer device may be a fixed computer device such as a personal computer or a server, or the computer device may be a mobile computer device such as a tablet computer or an e-book reader.

In some embodiments, the device 910 for generating an image reconstruction model and the image reconstruction device 920 may be a same device, or the device 910 for generating an image reconstruction model and the image reconstruction device 920 may be different devices. In addition, when the device 910 for generating an image reconstruction model and the image reconstruction device 920 are different devices, the device 910 for generating an image reconstruction model and the image reconstruction device 920 may be devices of a same type. For example, both the device 910 for generating an image reconstruction model and the image reconstruction device 920 may be a server. Alternatively, the device 910 for generating an image reconstruction model and the image reconstruction device 920 may be different types of devices. For example, the image reconstruction device 920 may be the personal computer or a terminal, and the device 910 for generating an image reconstruction model may be the server. Specific types of the device 910 for generating an image reconstruction model and the image reconstruction device 920 are not limited in this embodiment of this application.

The training method of the image reconstruction model is described in the foregoing embodiments, and the following describes the image reconstruction method.

FIG. 10 is a flowchart of an image reconstruction method according to an exemplary embodiment of this application. The method may be executed by a computer device, where the computer device may be the terminal 100 or the server 200 in FIG. 2. The method includes the following operations.

Operation 1002: Obtain a first image.

The first image is an image having a plurality of types of damage.

A method of obtaining the first image includes at least one of the following situations:

1. The computer device receives the first image. For example, the terminal is a terminal that initiates image scanning, the terminal scans a picture, and sends the first image to the server after completing the scanning.
2. The computer device obtains the first image from a stored database, for example, obtains at least one first image from an MNIST segmentation data set or a disclosed brain MRI data set. The foregoing method of obtaining the first image is merely an example. This is not limited in this embodiment of this application.

Operation 1004: Perform image reconstruction processing on the first image based on a trained reconstruction network layer, to obtain a first reconstruction image.

The computer device performs image reconstruction processing on the first image based on the trained reconstruction network layer. To be specific, the reconstruction network layer simultaneously reconstructs a plurality of types of defects of the first image, that is, deblurring, denoising, and debiasing. The reconstruction network layer reconstructs the first image into a high-quality image, that is, the first reconstruction image.

Operation 1006: Output the first reconstruction image.

The computer device outputs the first reconstruction image.

To verify an effect of the image reconstruction model obtained through training in the solutions provided in embodiments of this application, comparison effects between the solutions and the reference solutions that are provided in this application are compared by designing a comparison experiment. The MNIST data set is used in the experiment. The MNIST data set includes 60,000 training samples and 10,000 test examples. All images are in a size of 28 x 28. All images are pre-registered. All images are divided into 90% for training and 10% for testing, and 20% of the training images are retained as a validation set of two data sets.

Reference solutions include a reference solution 1, a reference solution 2, and a reference solution 3. In the reference solution, denoising (DN) processing, deblurring (DB) processing, and N4 bias correction are performed on a low-quality image, but processing sequence is different. Evaluation indicators used are respectively a peak signal to noise ratio (PSNR) and a structural similarity (SSIM), and are used to evaluate an image reconstruction effect.

Table 1 Comparison of average performance of repair methods in different solutions and different sequences

| Reconstruction sequence | N4+DB+DN N4+DN+DB | DN+N4+DB DB+N4+DN | DN+DB+N4 DB+DN+N4 | |
|---|---|---|---|---|
| Reference solution 1 | | | | Solution of this application |
| Peak signal to noise ratio PSNR | 26.18±0.47 | 26.37±0.49 | 27.97±0.58 | 35.52±0.32 |
| | 25.63±0.52 | 27.37±0.62 | 27.41±0.43 | |
| Structural similarity SSIM | 0.8346±0.0026 | 0.8613±0.0049 | 0.8691±0.0034 | 0.9482±0.0024 |
| | 0.8482±0.0039 | 0.8549±0.0025 | 0.8975±0.0041 | |
| Reference solution 2 | | | | Solution of this application |
| Peak signal to noise ratio PSNR | 22.59±0.58 | 21.86±0.44 | 23.24±0.38 | 35.52±0.32 |
| | 24.59±0.62 | 22.37±0.49 | 23.61±0.41 | |
| Structural similarity SSIM | 0.7785±0.0046 | 0.7826±0.0049 | 0.7891±0.0051 | 0.9482±0.0024 |
| | 0.7962±0.0039 | 0.7638±0.0037 | 0.7623±0.0042 | |
| Reference solution 3 | | | | Solution of this application |
| Peak signal to noise ratio PSNR | 28.64±0.38 | 25.73±0.46 | 25.61±0.29 | 35.52±0.32 |
| | 26.39±0.41 | 30.12±0.28 | 31.27±0.33 | |
| Structural similarity SSIM | 0.8342±0.0043 | 0.8024±0.0036 | 0.7993±0.0029 | 0.9482±0.0024 |
| | 0.8007±0.0058 | 0.8879±0.0034 | 0.9046±0.0053 | |

Experiment results are shown in Table 1. It can be learned from Table 1 that, in the reconstruction result of the solution provided in this application, a PSNR implemented on the MNIST data set is 35.52 dB, the SSIM is 0.9482, and performance on the data set is better than performance of the reference solution, and has high applicability and stability.

In conclusion, according to the method provided in this embodiment, the first image is obtained, and image reconstruction processing is performed on the first image based on the trained reconstruction network layer, to obtain a high-quality first reconstruction image. In this application, an accurate image reconstruction result may be obtained based on the trained reconstruction network layer.

FIG. 11 is a schematic diagram of an image reconstruction method according to an exemplary embodiment of this application. The method may be executed by a computer device, where the computer device may be the terminal 100 or the server 200 in FIG. 2. The method includes the following operations.

When a first front end 1101 receives a first image that needs to be reconstructed, the first image is an image having a plurality of types of damage. The first front end 1101 uploads the first image to a computer device 1102 for image reconstruction processing. For an image reconstruction processing process of the computer device 1102 on the first image, refer to the description in the foregoing embodiments. Details are not described herein again.

After the computer device 1102 performs image reconstruction processing on the first image, the computer device 1102 outputs an image reconstruction result to a second front end 1103.

In some embodiments, the first front end 1101 and the second front end 1103 may be a same front end, or may be different front ends. This is not limited in this embodiment of this application.

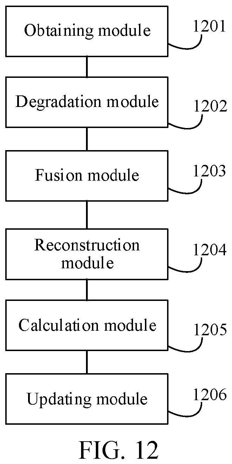

FIG. 12 is a schematic diagram of a structure of a training apparatus of an image reconstruction model according to an exemplary embodiment of this application. The apparatus may be implemented as all or a part of a computer device by using software, hardware, or a combination of the software and the hardware. The apparatus includes:

an obtaining module 1201, configured to obtain a first sample image and at least two second sample images, where the second sample image is an image having a single type of damage, and image quality of the first sample image is greater than image quality of the second sample image;

a degradation module 1202, configured to respectively add at least two damage features corresponding to the second sample images to the first sample image, to generate at least two single-degradation-type images;

a fusion module 1203, configured to fuse the at least two single-degradation-type images, to obtain a multi-degradation-type image corresponding to the first sample image, where the multi-degradation-type image is an image having at least two types of damage;

a reconstruction module 1204, configured to perform image reconstruction processing on the multi-degradation-type image, to generate a predicted reconstruction image corresponding to the multi-degradation-type image;

a calculation module 1205, configured to calculate a loss function value based on the second sample image, the single-degradation-type image, the first sample image, and the predicted reconstruction image; and

an updating module 1206, configured to update a model parameter of the image reconstruction model based on the loss function value.

In a possible implementation, the degradation module 1202 is further configured to: obtain a first feature corresponding to the first sample image; respectively obtain at least two second features corresponding to the at least two second sample images; for each of the at least two second features corresponding to one of the second sample images, obtain, based on the first feature and the second feature, the damage feature corresponding to the second sample image; and add the damage feature to the first feature of the first sample image, to obtain the single-degradation-type image corresponding to the first sample image.

The image reconstruction model includes a degradation network layer, and the degradation network layer includes a first degradation encoder, a damage kernel extractor, and a first degradation decoder.

In a possible implementation, the degradation module 1202 is further configured to: extract the first feature corresponding to the first sample image by using the first degradation encoder; respectively extract the at least two second features corresponding to the at least two second sample images by using the first degradation encoder; for each of the at least two second features corresponding to one of the second sample images, determine a part of the second feature that is inconsistent with the first feature by comparing the first feature and the second feature; decoupling the part that is inconsistent with the first feature from the second feature by using the damage kernel extractor, as the damage feature corresponding to the second sample image; add the damage feature to the first feature of the first sample image, to obtain an intermediate first feature; and input the intermediate first feature to the first degradation decoder for decoding processing, to obtain the single-degradation-type image corresponding to the first sample image.

In a possible implementation, the fusion module 1203 is further configured to: obtain at least two third features corresponding to the single-degradation-type images; and fuse the third feature, to obtain the multi-degradation-type image corresponding to the first sample image.

A degradation network layer of the image reconstruction model further includes a second degradation encoder and a second degradation decoder.

In a possible implementation, the fusion module 1203 is further configured to: obtain the at least two third features corresponding to the single-degradation-type images by using the second degradation encoder; fuse the third features, to obtain a degradation fusion feature; and perform decoding processing on the degradation fusion feature by using the second degradation decoder, to generate the multi-degradation-type image corresponding to the first sample image.

The image reconstruction model includes a reconstruction network layer, and the reconstruction network layer includes a reconstruction encoder and a reconstruction decoder.

In a possible implementation, the reconstruction module 1204 is further configured to: input the multi-degradation-type image to the reconstruction encoder for feature extraction, to obtain an image reconstruction feature; and perform decoding processing on the image reconstruction feature by using the reconstruction decoder, to generate the predicted reconstruction image corresponding to the multi-degradation-type image.

The loss function value includes a first loss function value and a second loss function value, the first loss function value is used to measure a similarity between the second sample image and the single-degradation-type image corresponding to the second sample image, and the second loss function value is used to measure authenticity of the predicted reconstruction image.

In a possible implementation, the calculation module 1205 is further configured to calculate the first loss function value based on a second feature corresponding to the second sample image and a third feature corresponding to the single-degradation-type image.

In a possible implementation, the calculation module 1205 is further configured to calculate the second loss function value based on a first feature corresponding to the first sample image and a fourth feature corresponding to the predicted reconstruction image.

In a possible implementation, the updating module 1206 is further configured to update a model parameter of the image reconstruction model based on a sum of the first loss function value and the second loss function value.

In a possible implementation, the calculation module 1205 is further configured to calculate the first loss function value based on a second feature corresponding to an $i^{th}$ second sample image of the at least two second sample images and a third feature corresponding to an $i^{th}$ single-degradation-type image of the at least two single-degradation-type images, where i is a positive integer.

The loss function value further includes a third loss function value and a fourth loss function value, the third loss function value is used to measure a similarity between a non-content part in the multi-degradation-type image and a non-content part in the first sample image, and the fourth loss function value is used to measure a similarity between the first sample image and the predicted reconstruction image.

In a possible implementation, the calculation module 1205 is further configured to calculate the third loss function value based on a structural feature corresponding to the multi-degradation-type image and a structural feature corresponding to the first sample image.

In a possible implementation, the calculation module 1205 is further configured to calculate the fourth loss function value based on a content feature and a texture feature that correspond to the first sample image and a content feature and a texture feature that correspond to the predicted reconstruction image.

In a possible implementation, the updating module 1206 is further configured to update the model parameter of the image reconstruction model based on a sum of the first loss function value, the second loss function value, the third loss function value, and the fourth loss function value.

The damage type includes at least one of a blur damage type, a noise damage type, and a bias damage type.

In a possible implementation, the obtaining module 1201 is further configured to obtain a first image, where the first image is an image having a plurality of types of damage.

In a possible implementation, the reconstruction module 1204 is further configured to: perform image reconstruction processing on the first image based on a trained reconstruction network layer, to obtain a first reconstruction image, where the first reconstruction image is an image obtained by removing the plurality of types of damage from the first image; and output the first reconstruction image.

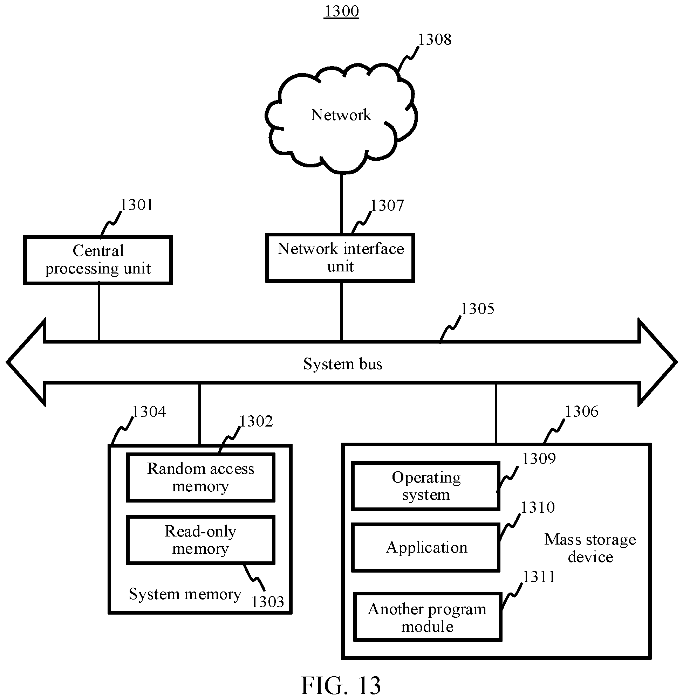

FIG. 13 is a block diagram of a structure of a computer device 1300 according to an exemplary embodiment of this application. The computer device may be implemented as the server in the foregoing solutions of this application. An image computer device 1300 includes a central processing unit (CPU) 1301, a system memory 1304 including a random access memory (RAM) 1302 and a read-only memory (ROM) 1303, and a system bus 1305 connecting the system memory 1304 and the central processing unit 1301. The image computer device 1300 further includes a mass storage device 1306 configured to store an operating system 1309, an application 1310, and another program module 1311.

The mass storage device 1306 is connected to the central processing unit 1301 through a mass storage controller (not shown) connected to the system bus 1305. The mass storage device 1306 and an associated computer-readable medium provide non-volatile storage for the image computer device 1300. To be specific, the mass storage device 1306 may include the computer-readable medium (not shown) such as a hard disk or a CD-ROM (CD-ROM) drive.

Without a loss of generality, the computer-readable medium may include a computer storage medium and a communication medium. The computer storage medium includes a volatile and non-volatile, removable, and non-removable medium implemented by using any method or technology for storing information such as computer-readable instructions, a data structure, a program module, or another data. The computer storage medium includes the RAM, the ROM, an erasable programmable read only memory (EPROM), an electronic-erasable read-only memory (EEPROM) flash memory, or another solid-state storage technology, the CD-ROM, a digital versatile disc (DVD), or another optical storage, a tape cartridge, a tape, disk storage, or another magnetic storage device. Certainly, a person skilled in the art may learn that the computer storage medium is not limited to the foregoing several types. The system memory 1304 and the mass storage device 1306 may be collectively referred to as the memory.

In accordance with various embodiments of this disclosure, the image computer device 1300 may also be connected to a remote computer on a network over a network, such as the internet, to run. To be specific, the image computer device 1300 may be connected to a network 1308 by using a network interface unit 1307 connected to the system bus 1305, or may be connected to another type of network or a remote computer system (not shown) by using the network interface unit 1307.

The memory further includes at least one computer program, the at least one computer program is stored in the memory, and the central processing unit 1301 executes the at least one program to implement all or some of operations of the training method of the image reconstruction model shown in the foregoing embodiments.

Embodiments of this application further provide a computer device. The computer device includes a processor and a memory. The memory stores at least one program, and the at least one program is loadable and executable by the processor to implement the training method of the image reconstruction model provided in the foregoing method embodiments.

Embodiments of this application further provide a computer-readable storage medium. The storage medium stores at least one computer program, and the at least one computer program is loadable and executable by a processor to implement the training method of the image reconstruction model provided in the foregoing method embodiments.

Embodiments of this application further provide a computer program product. The computer program product includes a computer program, and the computer program is stored in a computer-readable storage medium. The computer program is readable and executable by a processor of a computer device from the computer-readable storage medium, to enable the computer device to execute the computer program to implement the training method of the image reconstruction model provided in the foregoing method embodiments.

In a specific implementation of this application, when foregoing embodiments of this application are applied to a specific product or technology, user permission or consent need to be obtained for related data such as data, historical data, and user data processing related to a user identity or a feature, such as a profile, collection, use, and processing of the related data need to comply with the laws, regulations, and standards of related countries and regions.

## Claims

1. A training method of an image reconstruction model, wherein the method is executable by a terminal device, and the method comprises:

    obtaining a first sample image and at least two second sample images, each of the second sample images having a damaged part with a single type of damage, and image quality of the first sample image being greater than image quality of each of the second sample images;
    respectively adding at least two damage features, each representing the damaged part of one of the second sample images, to the first sample image, to generate at least two single-degradation-type images;
    fusing the at least two single-degradation-type images, to obtain a multi-degradation-type image, wherein the multi-degradation-type image is an image having at least two types of damage ;
    performing image reconstruction processing on the multi-degradation-type image, to generate a predicted reconstruction image;
    calculating a loss function value based on each of the second sample images, each of the single-degradation-type images, the first sample image, and the predicted reconstruction image; and
    updating a model parameter of the image reconstruction model based on the loss function value.

2. The method according to claim 1, wherein the respectively adding at least two damage features, each representing the damaged part of one of the second sample images, to the first sample image, to generate at least two single-degradation-type images comprises:

    obtaining a first feature and at least two second features, wherein the first feature represents an image feature of the first sample image, and the at least two second features respectively represent image features of the at least two second sample images; and
    for each of the at least two second features, obtaining, based on the first feature and the second feature, one of the damage features, and adding the damage feature to the first feature of the first sample image, to obtain one of the single-degradation-type images.

3. The method according to claim 2, wherein the image reconstruction model comprises a degradation network layer, and the degradation network layer comprises a first degradation encoder; and
the obtaining a first feature and at least two second features comprises:
extracting the first feature from the first sample image by using the first degradation encoder, and respectively extracting the at least two second features from the at least two second sample images by using the first degradation encoder.

4. The method according to claim 2, wherein the image reconstruction model comprises a degradation network layer, and the degradation network layer comprises a damage kernel extractor; and
the obtaining, based on the first feature and the second feature, one of the damage features comprises:
determining a part of the second feature that is inconsistent with the first feature by comparing the first feature and the second feature, and decoupling the part that is inconsistent with the first feature from the second feature by using the damage kernel extractor, as the one of the damage features.

5. The method according to claim 2, wherein the image reconstruction model comprises a degradation network layer, and the degradation network layer comprises a first degradation decoder; and
the adding the damage feature to the first feature of the first sample image, to obtain one of the single-degradation-type images comprises:
adding the damage feature to the first feature of the first sample image, to obtain an intermediate first feature; and inputting the intermediate first feature to the first degradation decoder for decoding processing, to obtain the one of the single-degradation-type images.

6. The method according to claim 1, wherein the fusing the at least two single-degradation-type images, to obtain a multi-degradation-type image comprises:
obtaining at least two third features from the at least two single-degradation-type images, wherein each of the third features represents an image feature of one of the single-degradation-type images, and fusing the at least two third features, to obtain the multi-degradation-type image.

7. The method according to claim 6, wherein a degradation network layer of the image reconstruction model further comprises a second degradation encoder and a second degradation decoder; and
the obtaining at least two third features from the at least two single-degradation-type images, wherein each of the third features represents an image feature of one of the single-degradation-type images, and fusing the at least two third features, to obtain the multi-degradation-type image comprises:

    obtaining the at least two third features from the at least two single-degradation-type images by using the second degradation encoder, and fusing the at least two third features, to obtain a degradation fusion feature; and
    performing decoding processing on the degradation fusion feature by using the second degradation decoder, to generate the multi-degradation-type image.

8. The method according to claim 1, wherein the image reconstruction model comprises a reconstruction network layer, and the reconstruction network layer comprises a reconstruction encoder and a reconstruction decoder; and
the performing image reconstruction processing on the multi-degradation-type image, to generate a predicted reconstruction image comprises:

    inputting the multi-degradation-type image to the reconstruction encoder for feature extraction, to obtain an image reconstruction feature; and
    performing decoding processing on the image reconstruction feature by using the reconstruction decoder, to generate the predicted reconstruction image.

9. The method according to claim 1, wherein the loss function value comprises a first loss function value and a second loss function value, the first loss function value is used to measure a similarity between the second sample image and the single-degradation-type image corresponding to the second sample image, and the second loss function value is used to measure authenticity of the predicted reconstruction image;
the calculating a loss function value based on each of the second sample images, each of the single-degradation-type images, the first sample image, and the predicted reconstruction image comprises:

    calculating the first loss function value based on each of at least two second features respectively representing image features of the at least two second sample images and each of at least two third features respectively representing image features of the at least two single-degradation-type images; and
    calculating the second loss function value based on a first feature representing an image feature of the first sample image and a fourth feature representing an image feature of the predicted reconstruction image; and
    the updating a model parameter of the image reconstruction model based on the loss function value comprises:
    updating the model parameter of the image reconstruction model based on a sum of the first loss function value and the second loss function value.

10. The method according to claim 9, wherein the calculating the first loss function value based on each of at least two second features respectively representing image features of the at least two second sample images and each of at least two third features respectively representing image features of the at least two single-degradation-type images comprises:
calculating the first loss function value based on a second feature representing the image feature of an $i^{th}$ second sample image of the at least two second sample images and a third feature representing the image feature of an $i^{th}$ single-degradation-type image of the at least two single-degradation-type images, wherein i is a positive integer.

11. The method according to claim 9, wherein the loss function value further comprises a third loss function value and a fourth loss function value, the third loss function value is used to measure a similarity between a non-content part in the multi-degradation-type image and a non-content part in the first sample image, and the fourth loss function value is used to measure a similarity between the first sample image and the predicted reconstruction image; and the method further comprises:

calculating the third loss function value based on a structural feature of a non-content part in the multi-degradation-type image and a structural feature of a non-content part in the first sample image; and
calculating the fourth loss function value based on a content feature and a texture feature of the first sample image and a content feature and a texture feature of the predicted reconstruction image; and
the updating the model parameter of the image reconstruction model based on a sum of the first loss function value and the second loss function value comprises:
updating the model parameter of the image reconstruction model based on a sum of the first loss function value, the second loss function value, the third loss function value, and the fourth loss function value.

12. The method according to claim 8, wherein the method further comprises:

obtaining a first image, wherein the first image is an image having a plurality of types of damage;
performing image reconstruction processing on the first image based on the reconstruction network layer, to obtain a first reconstruction image; and
outputting the first reconstruction image.

13. A training apparatus of an image reconstruction model, wherein the apparatus comprises:

an obtaining module, configured to obtain a first sample image and at least two second sample images, each of the second sample images having a damaged part with a single type of damage, and image quality of the first sample image being greater than image quality of each of the second sample images;
a degradation module, configured to respectively add at least two damage features, each representing the damaged part of one of the second sample images, to the first sample image, to generate at least two single-degradation-type images;
a fusion module, configured to fuse the at least two single-degradation-type images, to obtain a multi-degradation-type image, wherein the multi-degradation-type image is an image having at least two types of damage;
a reconstruction module, configured to perform image reconstruction processing on the multi-degradation-type image, to generate a predicted reconstruction image;
a calculation module, configured to calculate a loss function value based on each of the second sample images, each of the single-degradation-type images, the first sample image, and the predicted reconstruction image; and
an updating module, configured to update a model parameter of the image reconstruction model based on the loss function value.

14. The apparatus according to claim 13, wherein

the degradation module is further configured to: obtain a first feature and at least two second features, wherein the first feature represents an image feature of the first sample image, and the at least two second features respectively represent image features of the at least two second sample images; and
the degradation module is further configured to: for each of the at least two second features, obtain, based on the first feature and the second feature, one of the damage features, and add the damage feature to the first feature of the first sample image, to obtain one of the single-degradation-type images.

15. The apparatus according to claim 14, wherein the image reconstruction model comprises a degradation network layer, and the degradation network layer comprises a first degradation encoder; and
the degradation module is further configured to: extract the first feature from the first sample image by using the first degradation encoder, and respectively extract the at least two second features from the at least two second sample images by using the first degradation encoder.

16. The apparatus according to claim 14, wherein the image reconstruction model comprises a degradation network layer, and the degradation network layer comprises a damage kernel extractor; and

the degradation module is further configured to: determine a part of the second feature that is inconsistent with the first feature by comparing the first feature and the second feature, and decouple the part that is inconsistent with the first feature from the second feature by using the damage kernel extractor, as the one of the damage features.

17. The apparatus according to claim 14, wherein image reconstruction model comprises a degradation network layer, and the degradation network layer comprises a first degradation decoder; and

the degradation module is further configured to: add the damage feature to the first feature of the first sample image, to obtain an intermediate first feature; and input the intermediate first feature to the first degradation decoder for decoding processing, to obtain the one of the single-degradation-type images.

18. A computer device, wherein the computer device comprises a processor and a memory, the memory stores at least one computer program, and the at least one computer program is loadable and executable by the processor to implement the training method of the image reconstruction model according to any one of claims 1 to 12.

19. A computer-readable storage medium, wherein the computer-readable storage medium stores at least one computer program, and the at least one computer program is loadable and executable by a processor to implement the training method of the image reconstruction model according to any one of claims 1 to 12.

20. A computer program product, wherein the computer program product comprises a computer program, the computer program is stored in a computer-readable storage medium, the computer program is readable by a processor of a computer device from the computer-readable storage medium and executable by the processor, to enable the computer device to perform the training method of the image reconstruction model according to any one of claims 1 to 12.

FIG. 1

FIG. 2

Obtain a first sample image and at least two second sample images — 302

Respectively add at least two damage features, each representing a damaged part of one of the second sample images, to the first sample image, to generate at least two single-degradation-type images — 304

Fuse the at least two single-degradation-type images, to obtain a multi-degradation-type image corresponding to the first sample image — 306

Perform image reconstruction processing on the multi-degradation-type image, to generate a predicted reconstruction image corresponding to the multi-degradation-type image — 308

Calculate a loss function value based on each of the second sample images, each of the single-degradation-type images, the first sample image, and the predicted reconstruction image — 310

Update a model parameter of an image reconstruction model based on the loss function value — 312

FIG. 3

Obtain a first sample image and at least two second sample images
402

Respectively add at least two damage features corresponding to the at least two second sample images to the first sample image, to generate at least two single-degradation-type images
404

Obtain at least two third features corresponding to the single-degradation-type images, and fuse the third features, to obtain a multi-degradation-type image corresponding to the first sample image
406

Perform image reconstruction processing on the multi-degradation-type image, to generate a predicted reconstruction image corresponding to the multi-degradation-type image
408

Calculate a first loss function value based on a second feature corresponding to the second sample image and the third feature corresponding to the single-degradation-type image, and calculate a second loss function value based on a first feature corresponding to the first sample image and a fourth feature corresponding to the predicted reconstruction image
410

Update a model parameter of an image reconstruction model based on a sum of the first loss function value and the second loss function value
412

FIG. 4

FIG. 5

FIG. 6

FIG. 7

FIG. 8

Image reconstruction model

FIG. 9

Obtain a first image 1002

Perform image reconstruction processing on the first image based on a trained reconstruction network layer, to obtain a first reconstruction image 1004

Output the first reconstruction image 1006

FIG. 10

| First front end 1101 | Update a first image → | Computer device 1102 | Output an image reconstruction result → | Second front end 1103 |

FIG. 11

Obtaining module  1201

Degradation module  1202

Fusion module  1203

Reconstruction module  1204

Calculation module  1205

Updating module  1206

FIG. 12

1300

1308

Network

1301

Central
processing unit

1307

Network interface
unit

1305

System bus

1304

1302

Random access
memory

Read-only
memory

System memory   1303

1306

1309

Operating
system

1310

Application

Mass storage
device

1311

Another program
module

FIG. 13

## INTERNATIONAL SEARCH REPORT

| International application No. |
| --- |
| **PCT/CN2023/082436** |

| **A.** | **CLASSIFICATION OF SUBJECT MATTER** |
| --- | --- |

G06V10/774(2022.01)i; G06V10/80(2022.01)i; G06N3/08(2023.01)i

According to International Patent Classification (IPC) or to both national classification and IPC

| **B.** | **FIELDS SEARCHED** |
| --- | --- |

Minimum documentation searched (classification system followed by classification symbols)

IPC: G06V, G06N, G06T

Documentation searched other than minimum documentation to the extent that such documents are included in the fields searched

Electronic data base consulted during the international search (name of data base and, where practicable, search terms used)

VEN, CNTXT, EPTXT, WOTXT, USTXT, IEEE, CNKI: 图像, 重建, 还原, 修复, 质量, 调整, 更新, 损失函数, 退化, 损失特征, 损坏特征, 类型, image, picture, recover, quality, rectify, renovate, update, regressive, degenerate, loss, type

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| PX | CN 115115900 A (TENCENT TECHNOLOGY (SHENZHEN) CO., LTD.) 27 September 2022 (2022-09-27)<br>claims 1-15, and description, paragraphs 0054-0120 | 1-20 |
| A | CN 109191411 A (GUANGZHOU SHIYUAN ELECTRONICS CO., LTD.) 11 January 2019 (2019-01-11)<br>description, paragraphs 0034-0108 | 1-20 |
| A | CN 109146813 A (GUANGZHOU SHIYUAN ELECTRONICS CO., LTD.) 04 January 2019 (2019-01-04)<br>entire document | 1-20 |
| A | CN 111311704 A (SHANGHAI UNITED IMAGING INTELLIGENCE HEALTHCARE CO., LTD.) 19 June 2020 (2020-06-19)<br>entire document | 1-20 |
| A | CN 112529776 A (CHINA MOBILE (SUZHOU) SOFTWARE TECHNOLOGY CO., LTD. et al.) 19 March 2021 (2021-03-19)<br>entire document | 1-20 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 June 2023** | **15 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/082436** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2014375636 A1 (SIMPLEWARE LIMITED) 25 December 2014 (2014-12-25) entire document | 1-20 |

Form PCT/ISA/210 (second sheet) (July 2022)

**INTERNATIONAL SEARCH REPORT**
Information on patent family members

International application No.

**PCT/CN2023/082436**

| Patent document cited in search report | | | Publication date (day/month/year) | Patent family member(s) | | | Publication date (day/month/year) |
|---|---|---|---|---|---|---|---|
| CN | 115115900 | A | 27 September 2022 | None | | | |
| CN | 109191411 | A | 11 January 2019 | None | | | |
| CN | 109146813 | A | 04 January 2019 | None | | | |
| CN | 111311704 | A | 19 June 2020 | None | | | |
| CN | 112529776 | A | 19 March 2021 | None | | | |
| US | 2014375636 | A1 | 25 December 2014 | US | 2017249529 | A1 | 31 August 2017 |
| | | | | GB | 2515510 | A | 31 December 2014 |

Form PCT/ISA/210 (patent family annex) (July 2022)

**REFERENCES CITED IN THE DESCRIPTION**

**Patent documents cited in the description**

- CN 202210508810